# NEUE EUROPÄISCHE PATENTSCHRIFT

(11) **EP 1 581 736 B2**
(45) Veröffentlichungstag und Bekanntmachung des Hinweises auf die Entscheidung über den Einspruch: **19.01.2022**
(45) Hinweis auf die Patenterteilung: 08.08.2007
(21) Anmeldenummer: 03776851.2
(22) Anmeldetag: 20.11.2003
(51) Int. Cl.: F02M 37/22, B01D 17/02, F02M 37/28, F02M 37/32, B01D 36/00

(54) **KRAFTSTOFFFILTER**
FUEL FILTER
FILTRE A CARBURANT

(30) Priorität: 30.12.2002 DE 10261742; 30.10.2003 DE 10350781
(43) Veröffentlichungstag der Anmeldung: 05.10.2005
(73) Patentinhaber: Robert Bosch GmbH, 70442 Stuttgart (DE)
(72) Erfinder: DE LA AZUELA, Julian, E-28006 Madrid (ES); GRUEN, Juergen, 97846 Partenstein (DE); RODRIGUEZ-AMAYA, Nestor, 70372 Stuttgart (DE)
(86) Internationale Anmeldenummer: PCT/DE2003/003842
(87) Internationale Veröffentlichungsnummer: WO 2004/061289

(56) Entgegenhaltungen:
- EP-A- 1 126 158
- DE-A- 19 737 264
- FR-A- 1 440 976
- FR-A- 2 179 359
- US-A1- 2002 117 435

## Beschreibung

Die Erfindung betrifft einen Kraftstofffilter, insbesondere einen Dieselfilter, mit mindestens einem Kraftstoffeinlass, mindestens einem Kraftstoffauslass, Mitteln zum Abscheiden von Wasser, mindestens einem Sumpf und einem dem Sumpf zugeordneten Wasserablass sowie Steuerungsmitteln für den Wasserablass.

Solche Kraftstofffilter werden unter anderem in Dieselmotoren zum Herausfiltern von in Dieselkraftstoff enthaltenen Verunreinigungen und zum Abscheiden von Wasser aus dem Dieselkraftstoff eingesetzt, um hierdurch verursachte Störungen und Schäden wie beispielsweise Verunreinigungen oder Korrosion im Kraftstoffsystem oder eine schlechtere Verbrennung im Motor zu vermeiden.

Ein Problem solcher Kraftstofffilter besteht im Abführen des Wassers aus dem Sumpf, da das Wasser nach dem Abscheiden aus dem Kraftstoff in aller Regel Verunreinigungen beinhaltet und insofern nicht ohne weiteres an die Umgebung abgegeben werden darf.

Aus der US 4, 264, 442 ist ein Kraftstofffilter der eingangs genannten Art bekannt. Der Kraftstofffilter weist eine Kammer auf, in der ein Käfig angeordnet ist. Der Käfig definiert eine Kraftstoffeinlasskammer, die mit dem Kraftstoffeinlass verbunden ist, und eine Kraftstoffauslasskammer, die der Kraftstoffeinlasskammer gegenüber liegt, von dieser durch eine Zwischenwand getrennt ist und mit dem Kraftstoffauslass verbunden ist. Der über den Kraftstoffeinlass in den Kraftstofffilter eintretende Kraftstoff durchläuft die Kraftstoffeinlasskammer, tritt aus dieser über eine poröse Wand in die Kammer heraus, umkreist den Käfig, tritt auf der gegenüberliegenden Seite des Käfigs über eine ebenso poröse Wand in die Kraftstoffauslasskammer ein und fließt von dort über den Kraftstoffauslass als gereinigter Kraftstoff aus dem Kraftstofffilter ab. Der Boden der Kammer außerhalb des Käfigs dient als Sumpf für Wasser, das bei der Filtrierung abgeschieden wurde. Am Boden des Sumpfes ist ein Ventil angeordnet, das mit Hilfe eines im Sumpf angeordneten Wasserstandssensors gesteuert wird, und mit dem ein mit einer Leitung verbundener Wasserablass wahlweise geöffnet und verschlossen werden kann. Wird über den Sensor festgestellt, dass sich eine bestimmte Wassermenge im Sumpf angesammelt hat, wird das Ventil über einen am Wasserablass erzeugten Unterdruck geöffnet, ein wesentlicher Teil des Wassers aus dem Sumpf abgesaugt und über die Leitung in eine nachgeordnete Kammer abgeführt.

Ein wesentlicher Nachteil beim Abführen von Wasser in eine solche Kammer außerhalb des Kraftstofffilters besteht darin, dass die Kammer zum Auffangen des Wassers manuell entleert werden muss und der Kraftstofffilter insofern nicht wartungsfrei ist.

Dieser Nachteil besteht nicht bei einem aus der US 4,637,351 bekannten Kraftstofffiltersystem, das gegenüber dem aus der US 4,264,442 bekannten System insoweit weiterentwickelt worden ist, als der Wasserablass über verschiedene Leitungen und Kammern mit dem Luftansaug- bzw. dem Abgassystem des Motors verbunden und hierüber mit einem Unterdruck beaufschlagt ist. Stellt der Wasserstandssensor eine bestimmte Menge Wasser im Sumpf des Kraftstofffilters fest, wird das Ventil über einen Elektromagneten geöffnet, so dass das im Sumpf angesammelte Wasser durch den Unterdruck abgesaugt und dem Luftansaug- bzw. Abgassystem zugeführt wird. Im Ergebnis verdampft das abgeführte Wasser entweder bei der Verbrennung oder im Auspuff.

Zwar wird bei diesem System das Wasser über den Motor direkt entsorgt, allerdings besteht der Nachteil, dass die Anbindung des Wasserablasses des Kraftstofffilters an den Motor aufwändig und somit teuer ist. Darüber hinaus besteht beim Zuführen des Wassers in das Luftansaugsystem des Motors der Nachteil, dass die Verbrennungsluft während der Entwässerung des Kraftstofffilters wesentlich feuchter ist und insofern zumindest kurzzeitig die Verbrennung beeinträchtigt wird.

Die EP-A-1 126 158 zeigt eine Vorrichtung zum Abscheiden von Wasser aus Dieselkraftstoff mit einem Wasserabscheider zum Sammeln des Wassers, welches aus dem in einem Kraftfahrzeugtank vorgesehenen Dieselkraftstoff abgeschieden ist, wobei der Wasserabscheider über eine Leitung mit der Auspuffanlage des Kraftfahrzeugs verbunden ist, und in der Leitung ein Förderdruck für den Transport des abgeschiedenen Wassers zur Auspuffanlage vorgesehen ist, in welcher das abgeschiedene Wasser verdampft wird.

Die DE-A-101 24 887 zeigt eine Wasserentleerungseinrichtung eines Kraftstofffilters, bei dem ein automatisches Entleeren möglich ist. Das Entleeren geschieht automatisch durch Abführen des Wassers durch einen oberhalb eines in dem Filter gelegenen Wassersammelraumes vorgesehenen Entleerungsstutzen. Bei dieser Einrichtung ist ein Auslassventil als Druckentspannungsventil ausgebildet, mit dem das angesammelte Wasser bei laufendem Motor druckentspannt durch eine von dem Filtermedium gebildete Begrenzungswand eines das abgeschiedene Wasser speichernden Sammelraumes nach außerhalb des Filters abgeführt wird.

Nach der DE-A-10124887 wird gesammeltes Wasser aus einem Kraftstoff- Filter über ein Auslassventil einer Verdunstungsanlage "wie bei der Enteisungsautomatik eines Kühlschranks " zugeführt.

Verdunster bei einer Enteisungsautomatik eines Kühlschranks weisen gemäß der JP-A-2000180028**,** Behälter mit einem schwammartigen Material auf , Abs. 13 benennt Filz, poröses Material, gewebten Stoff, Decken.

Die Aufgabe der vorliegenden Erfindung besteht demgegenüber darin, einen Kraftstofffilter zur Verfügung zu stellen, der die oben genannten Nachteile nicht aufweist, insbesondere hinsichtlich des Abführens von Wasser im wesentlichen unabhängig von anderen Motorteilen betrieben werden kann und wartungsfrei ist. Auch sollte der Kraftstofffilter einfach aufgebaut und somit günstig in der Herstellung sein.

Diese Aufgabe wird bei einem Kraftstofffilter der eingangs genannten Art durch Mittel zum Abtrennen von Verunreinigungen aus dem abzulassenden Wasser gelöst.

Überraschender Weise wurde festgestellt, dass die Verunreinigungen aus dem Wasser vergleichsweise einfach abgetrennt werden können, so dass ein automatisches Abführen des Wassers direkt an die Umgebung möglich ist. Hierzu muss lediglich sichergestellt sein, dass ausschließlich von Verunreinigungen getrenntes Wasser, und kein Kraftstoff über den Wasserablass abgeführt wird, was mit einer entsprechenden Einstellung der Steuerungsmittel ohne weiteres möglich ist.

Hieraus ergibt sich gegenüber den vorbeschriebenen Kraftstofffltersystemen eine Vielzahl von Vorteilen. So ist zum einen das manuelle Entleeren oder Austauschen von gefüllten Wasserkammem nicht notwendig, wodurch die Wartung des Kraftstoffzufuhrsystems vereinfacht wird. Gleichzeitig kann auf eine aufwändige Leitungsanordnung zur Anbindung des Wasserablasses an das Luftansaug- bzw. Abgassystems verzichtet werden. Vielmehr ermöglicht die Erfindung eine von anderen Motorteilen unabhängige Entsorgung des abgeschiedenen Wassers. Im Ergebnis können sowohl die Wartungs- als auch die Herstellungs- und Montagekosten eines einen Kraftstofffilter der eingangs genannten Art benötigenden Kraftstoffsystems wesentlich gesenkt werden.

Bei einer äußerst einfachen Ausführung der Erfindung ist der Sumpf, anders als bei den eingangs beschriebenen, vorbekannten Kraftstofffiltern der Reinseite des Filters zugeordnet. Das im Kraftstoff enthaltene Wasser kann beispielsweise über eine entsprechende Beschichtung auf der Reinseite des Filters abgeschieden werden. Je nach Ausführungsform kann eine Anordnung, bei der der Sumpf der Schmutzseite des Filters zugeordnet ist, ebenso effektiv oder sogar effektiver sein. In diesem Fall wird das Wasser beispielsweise mit Hilfe einer an der Schmutzseite des Filters vorgesehenen Beschichtung abgeschieden.

Unabhängig davon, ob der Sumpf auf der Reinseite oder der Schmutzseite des Filters angeordnet ist, kann als Mittel zum Abtrennen von Verunreinigungen aus dem Wasser ein Filter, insbesondere ein Aktivkohlefilter, zur Filtrierung des aus dem Sumpf abgelassenen Wassers vorgesehen sein. Vorgeschlagen wird, diesen zusätzlichen Filter am Kraftstofffilter anzuordnen. In jedem Fall kann durch einen geeigneten Filter sichergestellt werden, dass das an die Umwelt abgegebene Wasser ausreichend sauber ist.

In einer anderen bevorzugten Ausführungsform der Erfindung ist als Abtrennmittel eine dem Wasserablass nachgeordnete, zur Umgebung offene Wasseraufnahme- und Verdampfungseinheit vorgesehen. Überraschend wurde festgestellt, dass das abgelassene Wasser einfach und ohne zusätzliche aufwändige technische Mittel auch durch Verdampfen von Verunreinigungen getrennt und somit problemlos an die Umgebung abgegeben und entsorgt werden kann. Bei dieser Ausführungsform muss sichergestellt sein, dass noch nicht verdampftes Wasser so ortsfest gehalten wird, dass es nicht in Bereiche abläuft, in die es aus Umwelt-, Sicherheits- oder sonstigen Gründen nicht gelangen darf.

Zum Verdampfen des angesammelten Wassers wird der Wasserablass des Kraftstofffilters so lange geöffnet, bis ein Großteil des im Sumpf angesammelten Wassers oder nahezu das gesamte Wasser abgelaufen und in der Wasseraufnahme- und Verdampfungseinheit aufgenommen ist, wobei der Wasserablass so rechtzeitig wieder geschlossen wird, dass kein Kraftstoff aus dem Sumpf abgelassen wird. Die Intervalle, in denen der Kraftstofffilter entleert werden muss, sind in aller Regel lang genug, so dass bis zu einem folgenden Ablassen von Wasser aus dem Sumpf die vorherige Menge abgelassenen Wassers vollständig verdampfen kann.

Auch wenn es bei normalen Umgebungsbedingungen und geeigneter Dimensionierung der Wasseraufnahme- und Verdampfungseinheit nicht notwendig ist, die Verdampfung beispielsweise durch gezielte Wärmezufuhr zu beschleunigen, bestehen insbesondere in einem Motorraum eines Kraftfahrzeugs die Verdampfung beschleunigende Bedingungen. So kann die Verdampfung beispielsweise durch die Abwärme des Motors beschleunigt sein bzw. bei gezielter Positionierung der Wasseraufnahme- und Verdampfungseinheit im Motorraum bewusst beschleunigt werden. Darüber hinaus kann die Verdampfung auch aufgrund einen durch Fahrtwind entstehenden Luftstrom oder über eine Zwangsbelüftung des Motorraums beschleunigt werden. Eine andere Möglichkeit zur Beschleunigung der Verdampfung besteht in der Anordnung einer eigenständigen Wärmezufuhr in der Wasseraufnahme- und Verdampfungseinheit, beispielsweise einer elektrisch betriebenen Heizwendel, wofür dann allerdings eine elektrische Energieversorgung benötigt wird. Alternativ kann der Wasseraufnahme- und Verdampfungseinheit beispielsweise auch über das Kühlsystem des Motors Wärme zugeführt werden.

In einer bevorzugten einfachen Ausführungsform weist die Wasseraufnahme- und Verdampfungseinheit einen in einem oberen Bereich zur Umgebung hin offenen Behälter, vorzugsweise aus einem temperaturbeständigen Material wie beispielsweise Polyamid, auf. Der Zulauf für das aus dem Kraftstofffilter abgelassene Wasser kann beispielsweise über die Öffnung im oberen Bereich des Behälters, aber beispielsweise auch über eine Leitung an der Seite oder gegebenenfalls auch am Boden des Behälters erfolgen. Die Öffnung an der Oberseite des Behälters kann mit einer feinmaschigen Abdeckung versehen sein, durch die ein Herausspritzen des im Behälter enthaltenen Wassers verhindert wird. Damit dient der Behälter wie eine Art Auffangbecken, aus dem das aus dem Kraftstofffilter abgelassene Wasser nicht herausfließen, aber dennoch an die Umgebung verdampfen kann. Je größer der Querschnitt des Behälters in dem Bereich ist, in dem das Wasser gehalten wird, desto größer ist die für die Verdampfung zur Verfügung stehende Wasseroberfläche.

In einer weiteren bevorzugten Ausgestaltung weist die Wasseraufnahme- und Verdampfungseinheit ein saugfähiges Material auf, das insbesondere mindestens teilweise aus einem saugfähigen Papier besteht und/oder schwammartig ausgebildet ist, und das aus dem Sumpf des Kraftstofffilters abgeführtes Wasser aufnimmt und solange hält, bis es vollständig verdampft ist. Je nach Saugkraft des Materials kann es ohne besonderes Behältnis einfach am Wasserablass des Kraftstofffilters angeordnet sein. Um ein Abtropfen des Wassers aus dem saugfähigen Material zu verhindern, kann es aber auch innerhalb eines Behälters angeordnet sein, der dann als Tropfschutz dient. Das saugfähige Material bietet in dieser Ausführungsform dann gleichzeitig einen Schutz gegen ein Herausspritzen des Wassers aus dem Behälter.

Grundsätzlich ist es von Vorteil, wenn die Wasseraufnahme- und Verdampfungseinheit eine möglichst große Verdampfungsoberfläche für das Wasser vorsieht. Insofern weist das saugfähige Material bevorzugt eine große Oberfläche auf. Dies lässt sich beispielsweise bei einem schwammartigen Material durch eine zur Umgebung hin rippenartige Struktur, ähnlich wie bei Kühlrippen eines Kühlkörpers für elektronische Komponenten, erreichen.

In einer anderen bevorzugten Ausführungsform der Erfindung sind als Mittel zum Abtrennen von Verunreinigungen aus dem abzulassenden Wasser Chemikalien zum Binden der Verunreinigungen vorgesehen, die entweder bereits im Sumpf und/oder einer dem Wasserablass nachgeordneten Kammer vorgehalten werden.

Für den Wasserablass gibt es je nach Anordnung des Kraftstofffilters im Kraftstoffleitungssystem unterschiedliche bevorzugte Schließsysteme.

So ist bei einer Anordnung, bei der am Kraftstoffeinlass gegenüber dem Kraftstoffauslass und gegenüber dem Wasserablass ein Überdruck herrscht, beispielsweise dann, wenn der Kraftstofffilter im Kraftstoffsystem hinter einer Kraftstoffpumpe angeordnet ist, am Wasserablass bevorzugt ein steuerbares Ventil vorgesehen. Aufgrund des im Kraftstofffilter dann gegenüber der Umgebung bestehenden Überdrucks wird das Wasser automatisch beim Öffnen des Ventils aus dem Sumpf herausgedrückt.

Ein Ventil zum Schließen des Wasserablasses kann mechanisch über einen Schwimmkörper betätigt werden, ohne dass elektrisch arbeitende Wassersensoren oder andere elektrische Bauteile zum Ablassen des Wassers notwendig wären. Ab Überschreiten eines maximalen Wasserpegels hebt der an der Phasengrenze zwischen Kraftstoff und Wasser befindliche Schwimmkörper das Ventil an, so dass Wasser abgelassen wird, und verschließt das Ventil je nach Ausführungsart wieder, wenn ein minimaler Wasserpegel erreicht bzw. unterschritten ist.

Umgekehrt, wenn am Kraftstoffauslass gegenüber dem Kraftstoffeinlass und dem Wasserablass ein Unterdruck herrscht, beispielsweise dann, wenn der Kraftstofffilter im Kraftstoffsystem vor einer Kraftstoffpumpe angeordnet ist, ist am Wasserablass bevorzugt eine Pumpe vorgesehen. Die Pumpe ist notwendig, um das Wasser aus dem Sumpf entgegen dem im Kraftstofffilter gegenüber der Umgebung herrschenden Unterdruck abzuführen. In einer vorteilhaften Ausgestaltung wird als Pumpe eine volumetrische Pumpe verwendet, die gegenüber anderen Pumpen den Vorteil aufweist, dass damit eine klar definierte Menge Wasser aus dem Sumpf abgeführt werden kann, so dass sichergestellt werden kann, dass - ausgehend von einem maximalen Wasserpegel - gerade soviel Wasser abgeführt wird, dass kein Kraftstoff über den Wasserablass abgelassen wird. Insofern ist die Verwendung einer Pumpe, insbesondere einer volumetrische Pumpe, auch dann von Vorteil, wenn im Kraftstofffilter gegenüber der Umgebung ein Überdruck herrscht.

Das Ventil oder die Pumpe können über im Sumpf angeordnete Wasserstandssensoren gesteuert werden. Insbesondere beim Einsatz einer volumetrischen Pumpe reicht es aus, wenn lediglich ein Wasserstandssensor im Sumpf verwendet wird, der anzeigt, wenn ein bestimmter Wasserstand erreicht oder überschritten worden ist, da daraufhin eine genau definierte Menge Wasser über die volumetrische Pumpe aus dem Sumpf abgeführt werden kann. Aber auch ohne volumetrische Pumpe kann ein einziger Wasserstandssensor zur Steuerung des Ventils oder der Pumpe ausreichen, beispielsweise dann, wenn die Steuerung eine definierte Zeit vorgibt, für die das Ventil nach Erreichen des spezifischen Wasserstands geöffnet werden oder die Pumpe betätigt werden soll.

Werden in einer anderen bevorzugten Ausführungsform zwei Wasserstandssensoren eingesetzt, mit denen eine obere und eine untere Füllmenge des Wassers im Sumpf feststellbar sind, kann das Öffnen und Schließen des Ventils bzw. das Ein- und Ausschalten der Pumpe vollständig über die Signale der beiden Sensoren gesteuert werden.

Im folgenden wird die Erfindung anhand von mehreren, das Prinzip von bevorzugten Ausführungsformen der Erfindung verdeutlichenden Figuren näher erläutert.

Es zeigen
- Figur 1: einen Filter mit einem Wasserablass und einem Behälter in vereinfachter Darstellung im Querschnitt, Figur 1 beschreibt keine Ausführungsform der Erfindung.
- Figur 2: eine Schaltungsanordnung für eine Steuerung des Wasserablass einer bevorzugten Ausführungsform der Erfindung,
- Figur 3: eine vereinfachte Darstellung eines Ausführungsbeispiels für einen Füllstandssensor im Querschnitt,
- Figur 4: einen Schwimmer-gesteuerten Wasserablass in vereinfachter Darstellung im Querschnitt, und
- Figur 5: das Prinzip eines bevorzugten Ausführungsbeispiels für einen Wasserablass in vereinfachter Darstellung im Querschnitt.

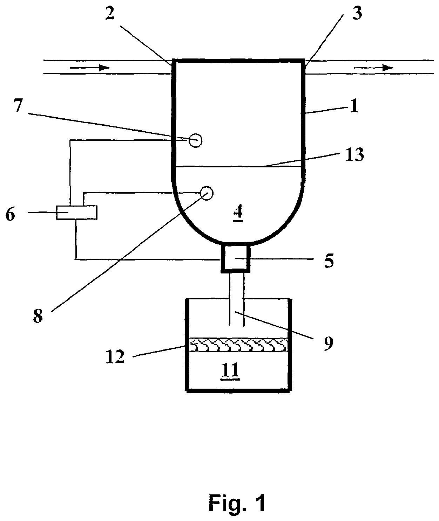

In Figur 1 ist schematisch ein Kraftstofffilter mit einem Gehäuse **1** dargestellt, an dessen oberer Seitenwand auf gegenüberliegenden Seiten ein Kraftstoffeinlass **2** und ein Kraftstoffauslass **3** vorgesehen sind. Dem Fachmann ist hinlänglich bekannt, wie ein Filter zum Filtrieren des Kraftstoffs in einem Kraftstofffiltergehäuse angeordnet werden kann und welche Mittel zum Abscheiden von Wasser vorzusehen sind. Deshalb wurde auf eine Darstellung der Anordnung des Filters im Kraftstofffiltergehäuse sowie der Mittel zum Abscheiden von Wasser aus dem Kraftstoff aus Gründen der Vereinfachung verzichtet. Der untere Bereich des Gehäuses **1** dient als Sumpf **4** für Wasser, das bei der Filtrierung des Kraftstoffs abgeschieden wird. Am Boden des Sumpfs **4** ist ein Wasserablass **5** mit einem steuerbaren Verschluss vorgesehen. Der Verschluss wird über eine Steuereinheit **6** in Abhängigkeit von den Füllstandssignalen eines oberen Wasserstandssensors **7** und eines unteren Wasserstandssensors **8** gesteuert. An der Unterseite des Verschlusses ist eine senkrechte Leitung **9** angeordnet.

Die Leitung **9** endet in einem unterhalb des Gehäuses **1** angeordneten, nach oben offenen Behälter **11**. Im Inneren des Behälters ist ein saugfähiges Material **12** zur Aufnahme von aus dem Sumpf **3** abgeführtem Wasser angeordnet, das sich waagerecht über den gesamten inneren Hohlraum des Behälters **11** erstreckt. Das saugfähige Material kann beispielsweise zumindest teilweise aus einem Schwamm, einem saugfähigen Papier oder einem Vlies bestehen.

Der Verschluss kann in einfacher Ausführung als Ventil ausgebildet sein, wenn der Druck am Boden des Sumpfes größer als der Umgebungsdruck ist, so dass das Wasser aus dem Sumpf bei geöffnetem Ventil einfach ablaufen kann. Dies ist insbesondere immer dann der Fall, wenn der Kraftstofffilter in Fließrichtung des Kraftstoffs hinter einer Kraftstoffpumpe angeordnet ist. Ist der Druck am Boden des Sumpfes geringer als der Umgebungsdruck, muss am Verschluss **4** eine Pumpe aufweisen, so dass das Wasser entgegen der Druckdifferenz aus dem Sumpf **4** abgepumpt werden kann.

Über die Steuerungseinheit **6** wird das Ventil geöffnet bzw. die Pumpe betätigt, wenn der mit Linie **13** angedeutete Wasserpegel im Sumpf **4** des Kraftstofffilters den oberen Wasserstandssensor **7** erreicht hat. Umgekehrt wird über die Steuerungseinheit **6** das Ventil geschlossen bzw. die Pumpe abgeschaltet, wenn der Wasserpegel **13** den unteren Wasserstandssensor **8** erreicht bzw. unterschritten hat.

Grundsätzlich ist es möglich, auf den unteren Wasserstandssensor **8** zu verzichten. Statt dessen kann die Steuerungseinheit **6** den Zeitpunkt zum Schließen des Ventils bzw. zum Abschalten der Pumpe anhand einer Zeitkonstante ermitteln, die beispielsweise auf empirischen Daten zur Abflussgeschwindigkeit des Wassers aus dem Sumpf **4** beruhen kann. Oder es wird eine klar definierte Menge des Wassers abgeführt, wie es beispielsweise bei der Verwendung einer volumetrischen Pumpe möglich ist.

Das Wasser wird in den Behälter **11** abgelassen, wo es von dem saugfähigen Material **12** aufgesaugt wird. Wird soviel Wasser aus dem Sumpf **4** abgelassen, dass es nicht vollständig vom saugfähigen Material aufgenommen werden kann, kann das überschüssige Wasser nach unten abtropfen und am Behälterboden gesammelt werden. Das saugfähige Material **12** bietet einen Schutz gegen ein Herausspritzen des am Boden des Behälters **11** gesammelten Wassers, so dass ein Verschmutzen der Umwelt durch im Wasser gelöste Dreckpartikel oder Ölrückstände sicher vermieden wird.

Bei entsprechender Dimensionierung des saugfähigen Materials kann das Wasser im zur Verdampfung zur Verfügung stehenden Zeitraum zwischen den Zeitpunkten, in denen Wasser aus dem Sumpf des Kraftstofffilters abgelassen wird vollständig in die Umgebung verdampfen. Unterstützt wird die Verdampfung in der Regel durch eine durch die Abwärme des Motors bedingt erhöhte Umgebungstemperatur.

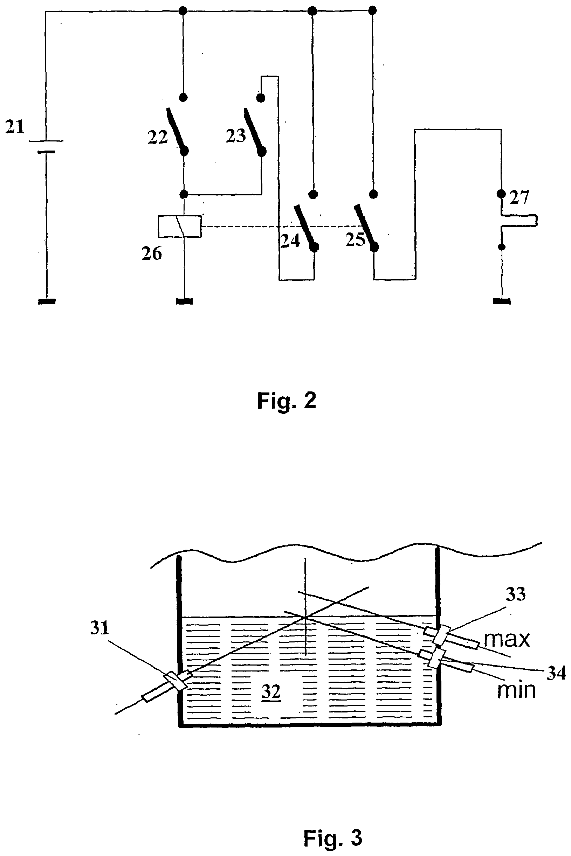

In Figur 2 ist eine bevorzugte Schaltungsanordnung für eine Steuerung des Wasserablasses mit einem oberen und einem unteren Wasserstandssensor dargestellt. Sie weist eine Spannungsquelle **21,** vier Schalter **22, 23, 24, 25,** ein Relais **26** und einen Signalgeber **27** auf. Der erste Schalter **22** wird von einem oberen Wassersensor geschaltet, der zweite Schalter **23** von einem unteren Wassersensor. Der dritte Schalter **24** und der vierte Schalter **25** werden durch das Relais **26** geschaltet. Bei eingeschaltetem vierten Schalter **25** ist der Signalgeber **27** mit der Spannungsquelle verbunden, der zweite und der dritte Schalter **23, 24** sind in Reihe geschaltet und liegen parallel zum ersten Schalter **22.** Durch einschalten des ersten Schalters **22** und/oder der zweiten und dritten Schalter **23, 24** wird das Relais **26** mit der Spannungsquelle **21** verbunden.

Solange der Wasserpegel den unteren Wasserstandssensor noch nicht unterschritten hat, ein minimaler Wasserpegel also nicht unterschritten wurde, ist der zweite Schalter **23** eingeschaltet. Der erste Schalter **22** wird dann eingeschaltet, wenn der Wasserpegel den oberen Wasserstandssensor erreicht hat, wenn also ein maximaler Wasserpegel erreicht bzw. überschritten worden ist. Mit Schließen des ersten Schalters **22** wird das Relais **26** mit der Spannungsquelle **21** verbunden und dadurch geschaltet. Hierdurch werden der dritte und der vierte Schalter **24, 25** kurzgeschlossen, so dass der Signalgeber **27** mit der Spannungsquelle **21** verbunden ist und ein Signal zum Öffnen des Wasserablasses beispielsweise zum Öffnen eines Ventils bzw. zum Betätigen einer Pumpe, abgibt und Wasser aus dem Sumpf des Kraftstofffilters ablaufen kann. Sobald der maximale Wasserpegel unterschritten wird, wird der erste Schalter **22** wieder geöffnet. Dies hat allerdings keinen Einfluss auf den Schaltsustand des Relais **26,** da es über den zweiten und den dritten Schalter **23, 24,** die beide noch geschlossen sind, mit der Spannungsquelle **21** verbunden bleibt. Erst, wenn der Wasserpegel den unteren Wassersensor und damit den minimalen Wasserpegel unterschritten hat, wird der zweite Schalter **23** wieder geöffnet. Hierdurch wird die Stromzufuhr zum Relais **26** unterbrochen, so dass es umschaltet und der dritte und der vierte Schalter **24, 25** wieder geöffnet werden. Dadurch wird der Signalgeber **27** von der Spannungsquelle **21** abgeklemmt, so dass sich der Signalpegel ändert und der Wasserablass geschlossen wird.

In Figur 3 ist eine andere bevorzugte Variante eines Wassersensorsystems zur Bestimmung des Erreichens eines maximalen und eines minimalen Wasserpegels dargestellt. Das Wassersensorsystem besteht aus einem Laser **31,** der auf einer Seite des Sumpfes **32** angeordnet und schräg aufwärts gerichtet ist. Der Laser **31** ist vorzugsweise so ausgerichtet, dass sein Strahl einen vorbestimmten Pegel als minimalen Wasserpegel in der Mitte des Sumpfes kreuzt. Auf der gegenüberliegenden Seite des Sumpfes sind zwei Lichtsensoren **33, 34** übereinander angeordnet, wobei der erste Lichtsensor **33** so ausgerichtet ist, dass der an der Phasenkante zwischen Kraftstoff und Wasser reflektierte Laserstrahl bei minimalem Wasserpegel auf die Sensorfläche auftrifft, und der zweite Lichtsensor **34** derart ausgerichtet ist, dass der an der Phasenkante reflektierte Laserstrahl bei maximalem Wasserpegel auf seine Sensorfläche auftrifft. Die übrigen Bauteile des Kraftstofffilters wie Wasserablass etc. sind der Einfachheit halber nicht dargestellt. Ein derartiges Wassersensorsystem eignet sich insbesondere für Kraftstoffsysteme in fest installierten, unbeweglichen Verbrennungsapparaten.

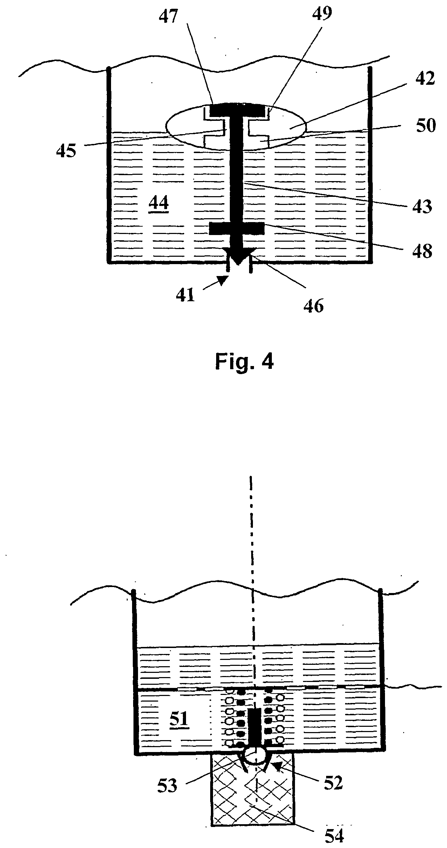

In Figur 4 ist das Prinzip einer Schwimmersteuerung zum Öffnen des Wasserablasses **41** bei einem maximalen Wasserpegel und Schließen des Wasserablasses **41** bei einem minimalen Wasserpegel dargestellt. Ein Schwimmkörper **42,** der so ausgebildet ist, dass er auf der wässrigen Phase schwimmt, aber schwerer als der Kraftstoff ist, wirkt mit einem Ventilstift **43** so zusammen, dass er den Ventilstift **43** anhebt, sobald ein bestimmter maximaler Wasserpegel im Sumpf **44** überschritten ist, und den Ventilstift **43** wieder absenkt, sobald ein bestimmter minimaler Wasserpegel unterschritten ist. Der Ventilstift **43** wird durch eine Durchgangsöffnung **45** im Schwimmkörper **42** geführt. Er weist an seinem oberen Ende und in seinem unteren Bereich etwas oberhalb seines den Wasserablass **41** verschließenden Ventilkegels **46** umlaufende, als Mitnehmer wirkende Stege **47, 48** auf, die mit entsprechenden Ausnehmungen **49, 50** an der Oberseite und der Unterseite des Schwimmkörpers **42** zusammenwirken. Überschreitet der Schwimmkörper **42** den maximalen Wasserpegel, wird der Ventilstift **43** angehoben, so dass der Wasserablass **41** geöffnet wird. Der Ventilstift **43** verbleibt dann so lange in seiner angehobenen Position, bis soviel Wasser aus dem Sumpf abgelassen worden ist, dass der sich mit dem Wasserstand absenkende Schwimmkörper den Ventilstift **43** nach unten drückt, so dass der Wasserablass **41** mit erreichen des minimalen Wasserpegels wieder geschlossen ist. Eine Führungsmechanik für den Ventilstift **43** ist aus Gründen der Vereinfachung nicht dargestellt.

In Figur 5 ist der Sumpf **51** eines Kraftstofffilters mit einem Wasserablass **52** dargestellt, der über ein elektromagnetisch verschließbares Ventil **53** geöffnet und verschlossen werden kann, und an den sich ein Filterkörper **54** anschließt, durch den das aus dem Sumpf **51** abgelassene Wasser gereinigt wird, so dass es unmittelbar an die Umgebung abgelassen werden kann. Der Filterkörper **54** kann auch als Schwamm ausgebildet sein, der das Wasser hält, so dass es an die Umgebung verdunsten kann. In beiden Fällen verbleiben im abgelassenen Wasser enthaltene Verunreinigungen im Filterkörper **54**.

Es sind eine Vielzahl weiterer Ausgestaltungen zur Steuerung des Wasserablasses oder der Mittel zum Abtrennen von Verunreinigungen aus dem abzulassenden bzw. abgelassenen Wasser möglich. So können als Mittel zur Steuerung des Wasserablasses auch Stellemente wie Bimetalle oder Memory-Metalle verwendet werden, die beispielsweise den Ventilkegel entgegen einer Federkraft anheben, wenn der Wasserablass geöffnet werden soll. Oder es kann ein Schwimmkörper verwendet werden, der nicht direkt mit einem Ventilstift, sondern über einen Hebelmechanismus mit einem Ventilstift zusammenwirkt. Auch können Filter zur Reinigung des abzulassen bzw. abgelassenen Wassers mit einem System zur Verdampfung des dann gereinigten Wassers oder einem System zum Binden von Verunreinigungen durch Chemikalien oder Katalysatoren wahlweise miteinander verknüpft werden.

## Patentansprüche

1. Kraftstofffilter, insbesondere Dieselfilter,
mit mindestens einem Kraftstoffeinlass (2),
mindestens einem Kraftstoffauslass (3),
Mitteln zum Abscheiden von Wasser,
mindestens einem Sumpf (4, 32, 44, 51),
einem dem Sumpf zugeordneten Wasserablass (5, 41, 52) und
Steuerungsmitteln (6) für den Wasserablass (5, 41, 52),
mit Mittel zum Abtrennen von Verunreinigungen aus dem abgelassenen Wasser,
**dadurch gekennzeichnet, dass**
am Kraftstofffilter stromabwärts des Wasserablasses ein Filterkörper (54), insbesondere ein Aktivkohlefilter, angebracht ist, zur Filtrierung des aus dem Sumpf abgelassenen Wassers,
wobei der Filterkörper (54) als Schwamm ausgebildet ist, der das Wasser hält, so dass es an die Umgebung verdunsten kann.

2. Kraftstofffilter nach Anspruch 1, **gekennzeichnet durch** einen Filter zum Reinigen des Kraftstoffs, wobei der Sumpf der Reinseite des Filters zugeordnet ist.

3. Kraftstofffilter nach Anspruch 1, **gekennzeichnet durch** einen Filter zum Reinigen des Kraftstoffs, wobei der Sumpf der Schmutzseite des Filters zugeordnet ist.

4. Kraftstofffilter nach einem der Ansprüche 1 bis 3, **gekennzeichnet durch** eine dem Wasserablass (4) nachgeordnete, zur Umgebung offene Wasseraufnahme- und Verdampfungseinheit.

5. Kraftstofffilter nach Anspruch 4, **dadurch gekennzeichnet, dass** die Wasseraufnahme- und Verdampfungseinheit einen in einem oberen Bereich zur Umgebung hin offenen Behälter (11) aufweist.

6. Kraftstofffilter nach Anspruch 4 oder 5, **dadurch gekennzeichnet, dass** die Wasseraufnahme- und Verdampfungseinheit ein saugfähiges Material (12) aufweist.

7. Kraftstofffilter nach Anspruch 6, **dadurch gekennzeichnet, dass** das Material (12) mindestens zum Teil aus einem saugfähigen Papier besteht.

8. Kraftstofffilter nach Anspruch 6 oder 7, **dadurch gekennzeichnet, dass** das Material (12) mindestens teilweise schwammartig ist.

9. Kraftstofffilter nach einem der Ansprüche 4 bis 8, **dadurch gekennzeichnet, dass** die Wasseraufnahme- und Verdampfungseinheit eine große Verdampfungsoberfläche aufweist.

10. Kraftstofffilter nach einem der Ansprüche 1 bis 9, **gekennzeichnet durch** Chemikalien zum Binden der Verunreinigungen, die im Sumpf und/oder in einer dem Wasserablass nachgeordneten Kammer vorgesehen sind.

11. Kraftstofffilter nach einem der Ansprüche 1 bis 10, **dadurch gekennzeichnet, dass** am Wasserablass (5, 41, 52) ein steuerbares Ventil (46, 53) angeordnet ist.

12. Kraftstofffilter nach einem der Ansprüche 1 bis 11, **gekennzeichnet durch** ein durch einen Schwimmkörper (42) betätigtes Ventil (43, 46).

13. Kraftstofffilter nach einem der Ansprüche 1 bis 12, **gekennzeichnet durch** eine am Wasserablass (5) vorgesehene Pumpe.

14. Kraftstofffilter nach Anspruch 13, **gekennzeichnet durch** eine volumetrische Pumpe.

15. Kraftstofffilter nach einem der Ansprüche 1 bis 14, **gekennzeichnet durch** mindestens einen im Bereich des Sumpfs (4, 32, 44, 51) angeordneten Wasserstandssensor (7, 8, 33, 34) zur Steuerung des Wasserablasses (5).

16. Kraftstofffilter nach Anspruch 15, **gekennzeichnet durch** zwei Wasserstandssensoren (7, 8, 31, 33,34).

## Claims

1. Fuel filter, in particular diesel filter,
with at least one fuel inlet (2),
at least one fuel outlet (3),
means for the separation of water,
at least one sump (4, 32, 44, 51),
a water discharge (5, 41, 52) assigned to the sump, and control means (6) for the water discharge (5, 41, 52),
with means for the separation of impurities from the discharged water,
**characterized in that**
a filter body (54), in particular an activated-charcoal filter, is mounted on the fuel filter, downstream of the water discharge, for filtering the water discharged from the sump, the filter body (54) being in the form of a sponge that retains the water such that it can evaporate into the environment.

2. Fuel filter according to Claim 1, **characterized by** a filter for purifying the fuel, the sump being assigned to the clean side of the filter.

3. Fuel filter according to Claim 1, **characterized by** a filter for purifying the fuel, the sump being assigned to the dirty side of the filter.

4. Fuel filter according to one of Claims 1 to 3, **characterized by** a water uptake and evaporation unit downstream of the water discharge (4) and is open to the environment.

5. Fuel filter according to Claim 4, **characterized in that** the water uptake and evaporation unit has a container (11) which is open in an upper region to the environment.

6. Fuel filter according to Claim 4 or 5, **characterized in that** the water uptake and evaporation unit has an absorbent material (12).

7. Fuel filter according to Claim 6, **characterized in that** the material (12) consists at least partially of an absorbent paper.

8. Fuel filter according to Claim 6 or 7, **characterized in that** the material (12) is at least partially sponge-like.

9. Fuel filter according to one of Claims 4 to 8, **characterized in that** the water uptake and evaporation unit has a large evaporation surface.

10. Fuel filter according to one of Claims 1 to 9, **characterized by** chemicals for binding the impurities, the said chemicals being provided in the sump and/or in a chamber downstream of the water discharge.

11. Fuel filter according to one of Claims 1 to 10, **characterized in that** a controllable valve (46, 53) is arranged on the water discharge (5, 41, 52).

12. Fuel filter according to one of Claims 1 to 11, **characterized by** a valve (43, 46) actuated by a floating body (42).

13. Fuel filter according to one of Claims 1 to 12, **characterized by** a pump provided on the water discharge (5) .

14. Fuel filter according to Claim 13, **characterized by** a volumetric pump.

15. Fuel filter according to one of Claims 1 to 14, **characterized by** at least one water-level sensor (7, 8, 33, 34), arranged in the region of the sump (4, 32, 44, 51), for controlling the water discharge (5).

16. Fuel filter according to Claim 15, **characterized by** two water-level sensors (7, 8, 31, 33, 34).

## Revendications

1. Filtre à carburant, en particulier filtre à gazole, comportant au moins une entrée de carburant (2),
au moins une sortie de carburant (3),
des moyens pour isoler l'eau,
au moins un pot (4, 32, 44, 51),
une évacuation d'eau (5, 41, 52) associée au pot et
des moyens de commande (6) pour l'évacuation d'eau (5, 41, 52),
avec des moyens pour séparer les impuretés de l'eau évacuée,
**caractérisé en ce que**
le filtre à carburant comporte en aval de l'évacuation d'eau, un corps de filtre (54), en particulier un filtre à charbon actif, pour filtrer l'eau évacuée du pot, le corps de filtre (54) étant réalisé en tant qu'éponge qui retient l'eau, de sorte qu'elle puisse s'évaporer dans l'environnement.

2. Filtre à carburant selon la revendication 1,
**caractérisé par**
un filtre pour le nettoyage du carburant, le pot étant associé au côté propre du filtre.

3. Filtre à carburant selon la revendication 1,
**caractérisé par**
un filtre pour le nettoyage du carburant, le pot étant associé au côté sale du filtre.

4. Filtre à carburant selon l'une quelconque des revendications 1 à 3,
**caractérisé par**
une unité de collecte d'eau et d'évaporation ouverte sur l'environnement et placée en aval de l'évacuation d'eau (4) .

5. Filtre à carburant selon la revendication 4,
**caractérisé en ce que**
l'unité de collecte d'eau et d'évaporation présente un récipient (11) ouvert sur l'environnement dans une zone supérieure.

6. Filtre à carburant selon la revendication 4 ou 5,
**caractérisé en ce que**
l'unité de collecte d'eau et d'évaporation présente une matière absorbante (12).

7. Filtre à carburant selon la revendication 6,
**caractérisé en ce que**
la matière (12) est constituée, au moins en partie, de papier absorbant.

8. Filtre à carburant selon la revendication 6 ou la revendication 7,
**caractérisé en ce que**
la matière (12) est au moins partiellement spongieuse.

9. Filtre à carburant selon l'une quelconque des revendications 4 à 8,
**caractérisé en ce que**
l'unité de collecte d'eau et d'évaporation présente une grande surface d'évaporation.

10. Filtre à carburant selon l'une quelconque des revendications 1 à 9,
**caractérisé par**
des produits chimiques pour la liaison des impuretés qui sont prévus dans le pot et/ou dans une chambre placée en aval de l'évacuation d'eau.

11. Filtre à carburant selon l'une quelconque des revendications 1 à 10,
**caractérisé en ce**
**qu'**une soupape (46, 53) pouvant être commandée, est disposée sur l'évacuation d'eau (5, 41, 52).

12. Filtre à carburant selon l'une quelconque des revendications 1 à 11,
**caractérisé par**
une soupape (43, 46) actionnée par un corps flottant (42).

13. Filtre à carburant selon l'une quelconque des revendications 1 à 12,
**caractérisé par**
une pompe prévue sur l'évacuation d'eau (5).

14. Filtre à carburant selon la revendication 13,
**caractérisé par**
une pompe volumétrique.

15. Filtre à carburant selon l'une quelconque des revendications 1 à 14,
**caractérisé par**
au moins un capteur de niveau d'eau (7, 8, 33, 34) disposé dans la région du pot (4, 32, 44, 51) pour commander l'évacuation d'eau (5).

16. Filtre à carburant selon la revendication 15,
**caractérisé par**
deux capteurs de niveau d'eau (7, 8, 31, 33, 34).
